Europäisches Patentamt

European Patent Office

Office européen des brevets

(19)

(11) **EP 0 748 262 B1**

(12) **EUROPÄISCHE PATENTSCHRIFT**

(45) Veröffentlichungstag und Bekanntmachung des Hinweises auf die Patenterteilung:
**16.12.1998 Patentblatt 1998/51**

(21) Anmeldenummer: **95910535.4**

(22) Anmeldetag: **28.02.1995**

(51) Int. Cl.$^6$: **B05D 7/26**, C09D 133/06, C08G 18/62, C08G 18/79

(86) Internationale Anmeldenummer:
**PCT/EP95/00729**

(87) Internationale Veröffentlichungsnummer:
**WO 95/23653 (08.09.1995 Gazette 1995/38)**

(54) **ISOCYANATVERNETZBARES BESCHICHTUNGSMITTEL AUF BASIS VON POLY(METH-)ACRYLHARZEN**

POLY(METH-)ACRYLIC RESIN-BASED COATING AGENT WHICH CAN BE CROSS-LINKED WITH ISOCYANATE

AGENT DE REVETEMENT RETICULABLE EN ISOCYANATE A BASE DE RESINES POLYACRYLIQUES OU POLYMETHACRYLIQUES

(84) Benannte Vertragsstaaten:
**AT BE CH DE DK ES FR GB IT LI NL SE**

(30) Priorität: **05.03.1994 DE 4407409**

(43) Veröffentlichungstag der Anmeldung:
**18.12.1996 Patentblatt 1996/51**

(73) Patentinhaber:
**BASF Coatings Aktiengesellschaft
48165 Münster (DE)**

(72) Erfinder:
• **BRÜNNEMANN, Michael
D-48167 Münster (DE)**

• **RINK, Heinz-Peter
D-Münster (DE)**
• **RÖCKRATH, Ulrike
D-48308 Senden (DE)**

(74) Vertreter: **Fitzner, Uwe, Dr.
Dres. Fitzner, Münch & Jungblut,
Kaiserswerther Strasse 74
40878 Ratingen (DE)**

(56) Entgegenhaltungen:
**EP-A- 0 320 719            DE-A- 2 500 309**

**Beschreibung**

Die vorliegende Erfindung betrifft ein Beschichtungsmittel, enthaltend

(A) mindestens ein hydroxylgruppenhaltiges Polyacrylatharz und

(B) mindestens ein Vernetzungsmittel.

Die vorliegende Erfindung betrifft außerdem Verfahren zur Herstellung eines mehrschichtigen, schützenden und/oder dekorativen Überzuges auf einer Substratoberfläche sowie die Verwendung der Beschichtungsmittel im Bereich der Autoreparaturlackierung.

Mehrschichtige Überzüge, insbesondere zweischichtige Metalliclackierungen, werden vor allem nach dem base-coat/clear-coat-Verfahren hergestellt. Dieses Verfahren ist bekannt und beispielsweise in der US-A-3,639,147 und der EP-A-38 127 beschrieben.

Mit dem base-coat/clear-coat-Verfahren sind Lackierungen herstellbar, die sich im Vergleich zu einschichtigen Decklackierungen durch eine verbesserte Effektgebung und durch die Möglichkeit, Lackierungen mit leuchtenderen und reineren Farbtönen herzustellen, auszeichnen.

Der vorlackierte Basislack bestimmt, je nach Art, Menge und räumlicher Orientierung der eingesetzten Pigmente, den Farbton und ggf. den Effekt (z.B. Metalleffekt oder Perlglanzeffekt) der Lackierung.

Nach Aufbringen des Basislackes wird dem aufgebrachten Basislackfilm in einer Abdunstphase wenigstens ein Teil der organischen Lösemittel bzw. wenigstens ein Teil des Wassers entzogen. Auf diese vorgetrocknete Basislackschicht wird dann ein nichtwäßriger, transparenter Decklack aufgebracht (Naß-in-Naß-Verfahren). Anschließend werden dann Basislackschicht und Decklackschicht zusammen getrocknet.

Der aufgebrachte transparente Decklack verleiht der Zweischichtlackierung Glanz und Fülle und schützt die aufgebrachte pigmentierte Lackschicht vor chemischen und physikalischen Angriffen.

Mit dem in Rede stehenden Verfahren können nur dann qualitativ hochwertige Zweischichtlackierungen erhalten werden, wenn der aufgebrachte transparente Decklack die aufgebrachte Basislackschicht nicht so stört, daß es zu einer Verschlechterung des optischen Effektes (z.B. Wolkenbildung) kommt. Andererseits muß der transparente Decklack so zusammengesetzt sein, daß er nach dem Trocknungsprozeß auf der Basislackschicht gut haftet. Weitere wichtige Eigenschaften, die die nach dem Trocknungsprozeß erhaltene transparente Decklackschicht aufweisen muß, sind hohe Transparenz, sehr guter Decklackstand, guter Glanz und gute mechanische Eigenschaften, wie Härte, Kratzfestigkeit und Elastizität. Nicht zuletzt muß die nach dem Trocknungsprozeß erhaltene transparente Decklackschicht eine hohe Widerstandsfähigkeit gegen klimatische Einflüsse (z.B. Temperaturschwankungen, Feuchtigkeit in Form von Wasserdampf, Regen, Tau, Belastung durch Strahlung usw.) und gegen Angriffe durch Säuren oder andere Chemikalien, wie z.B. organische Lösemittel, aufweisen.

In der JP-A-1-158079 werden nichtwäßrige, transparente Decklacke für zweischichtige Decklackierungen des base-coat/clear-coat-Typs beschrieben, die ein hydroxylgruppenhaltiges Polyacrylatharz enthalten, das erhältlich ist, indem 10 bis 50 Gew.-% eines Adduktes aus einem cyclischen Ester, wie z.B. ε-Caprolacton und Hydroxiethylacrylat oder -methacrylat, 0 bis 40 Gew.-% eines Hydroxialkylacrylats oder -methacrylats und 30 bis 80 Gew.-% eines copolymerisierbaren Vinylmonomeren zu einem Polyacrylatharz mit einer Hydroxylzahl von 60 bis 160, einer Säurezahl von 0 bis 40 und einer Glasübergangstemperatur von -50 bis +40°C polymerisiert werden. Die in der JP-A-1-158079 beschriebenen transparenten Decklacke liefern Lackierungen, die insbesondere hinsichtlich ihrer Säurebeständigkeit und Haftung verbesserungsbedürftig sind.

Aus der JP-A-4-1254 sind Beschichtungsmittel bekannt, die neben einem Vernetzungsmittel ein hydroxylgruppenhaltiges Polyacrylatharz enthalten, welches unter Verwendung von 4-t-Butylcycloherylacrylat und/oder 4-t-Butylcyclohexylmethacrylat als Monomerkomponente hergestellt worden ist. Als hydroxylgruppenhaltiges Monomer werden zur Herstellung des Polyacrylatharzes vor allem Hydroxiethylacrylat und Hydroxiethylmethacrylat eingesetzt. Diese aus der JP-A-4-1254 bekannten Beschichtungsmittel weisen bei Verwendung als transparenter Decklack über einem Basislack vor allem den Nachteil auf, daß Beschichtungen mit einer unzureichenden Haftung auf der Basislackschicht resultieren. Ferner weisen die resultierenden Beschichtungen eine schlechte Lösemittelbeständigkeit, eine hohe Quellbarkeit sowie eine schlechte Überlackierbarkeit auf.

Schließlich sind in der nicht vorveröffentlichten deutschen Patentanmeldung P 43 10 414.2 Beschichtungsmittel der eingangs genannten Art beschrieben, die als Bindemittel ein hydroxylgruppenhaltiges Polyacrylatharz enthalten, das hergestellt worden ist unter Verwendung von 4-Hydroxi-n-butylacrylat und/oder 4-Hyroxi-n-butylmethacrylat als Monomerkomponente. Die dort beschriebenen Beschichtungsmittel werden insbesondere im Bereich der Automobilserienlackierung eingesetzt. Beschichtungsmittel für den Bereich der Autoreparaturlackierung sind in dieser Anmeldung nicht beschrieben.

Weiterhin ist aus der EP-A-320 719 ein Überzugsmittel bekannt, das neben einem hydroxylgruppenhaltigen Acrylatcopolymerisat einen isocyanatgruppenhaltigen Vernetzer enthält.

Außerdem sind auch aus der DE-A-2 500 309 Überzugsmittel bekannt, die ein hydroxylgruppenhaltiges Acrylatcopolymerisat und isocyanatgruppenhaltige Vernetzer enthalten.

Ferner ist in der EP-A-588 314 ein Überzugsmittel beschrieben, das eine Mischung aus 2 verschiedenen, hydroxylgruppenhaltigen Acrylatcopolymerisaten und einen isocyanatgruppenhaltigen Vernetzer enthält.

Schließlich ist aus der JP-A-2-245 268 ein Überzugsmittel bekannt, das neben einem isocyanatgruppenhaltigen Vernetzer ein hydroxylgruppenhaltiges Acrylatcopolymerisat auf Basis Hydroxybutyl(meth)acrylat enthält.

Der vorliegenden Erfindung lag somit die Aufgabe zugrunde, Beschichtungsmittel zur Verfügung zu stellen, die bei Verwendung als transparenter Decklack über einer Basislackschicht zu Beschichtungen mit einer gegenüber bekannten Beschichtungsmitteln verbesserten Kratzfestigkeit führen. Ferner sollten die resultierenden Beschichtungen vor allem eine gute Haftung zur Basislackschicht sowie außerdem eine hohe Härte bei gleichzeitig guter Elastizität, einen sehr guten Decklackstand, eine hohe Transparenz und einen guten Glanz aufweisen. Außerdem sollten die resultierenden Beschichtungen eine gute Polierbarkeit sowie eine gute Witterungsbeständigkeit aufweisen. Schließlich sollten die Beschichtungsmittel eine gute Verarbeitbarkeit aufweisen und für die Autoreparaturlackierung geeignet sein, d.h. sie sollten bei niedrigen Temperaturen von im allgemeinen unter 120°C, bevorzugt unter 80°C, aushärtbar sein. Auch bei diesen niedrigen Temperaturen sollten die Beschichtungsmittel schnell aushärten (insbesondere schnelle Durchtrocknung), dabei aber eine möglichst lange Verarbeitbarkeit (Topfzeit) aufweisen.

Überraschenderweise wird diese Aufgabe durch ein Beschichtungsmittel der eingangs genannten Art gelöst, das daurch gekennzeichnet ist, daß

1.) die Komponente (A) ein hydroxylgruppenhaltiges Polyacrylatharz ist, das erhältlich ist, indem

(a) 10 bis 51 Gew.-% einer Mischung aus

(a1) einem oder mehreren Monomeren, ausgewählt aus der Gruppe 4-Hydroxi-n-butylacrylat und/oder 4-Hydroxi-n-butylmethacrylat und/oder 3-Hydroxi-n-butylacrylat und/oder 3-Hydroxi-n-butylmethacrylat und

(a2) einem oder mehreren Monomeren, ausgewählt aus der Gruppe 3-Hydroxi-n-propylacrylat und/oder 3-Hydroxi-n-propylmethacrylat und/oder 2-Hydroxi-n-propylacrylat und/oder 2-Hydroxi-n-propylmethacrylat,

(b) 0 bis 20 Gew.-% eines von (a) verschiedenen hydroxylgruppenhaltigen Esters der Acrylsäure oder der Methacrylsäure mit mindestens 5 C-Atomen im Alkoholrest und/oder eines von (a) verschiedenen hydroxylgruppenhaltigen Esters einer polymerisierbaren ethylenisch ungesättigten Carbonsäure oder eines Gemisches aus solchen Monomeren,

(c) 28 bis 85 Gew.-% eines von (a) und (b) verschiedenen aliphatischen oder cycloaliphatischen Esters der Acrylsäure oder der Methacrylsäure mit mindestens 4 C-Atomen im Alkoholrest oder eines Gemisches aus solchen Monomeren,

(d) 0 bis 25 Gew.-% eines von (a), (b) und (c) verschiedenen vinylaromatischen Kohlenwasserstoffs oder eines Gemisches aus solchen Monomeren,

(e) 0 bis 5 Gew.-% einer ethylenisch ungesättigten Carbonsäure oder einer Mischung aus ethylenisch ungesättigten Carbonsäuren und

(f) 0 bis 20 Gew.-% eines von (a), (b), (c), (d) und (e) verschiedenen ethylenisch ungesättigten Monomeren oder eines Gemisches aus solchen Monomeren

zu einem Polyacrylatharz mit einer Hydroxylzahl von 60 bis 200 mgKOH/g, einer Säurezahl von 0 bis 35 mgKOH/g und einem zahlenmittleren Molekulargewicht von 1000 bis 5000 polymerisiert werden, wobei die Summe der Gewichtsanteile der Komponenten (a) bis (f) jeweils 100 Gew.-% beträgt und

2.) die Komponente (B) eine Mischung aus

(B1) mindestens einem Polymerisat eines aliphatischen und/oder cycloaliphatischen und/oder eines araliphatischen Di- und/oder Polyisocyanates mit einer mittleren Funktionalität von 3 bis 4 und mit einem Uretdiongruppengehalt von maximal 5 %,

(B2) ggf. mindestens einem Polymerisat eines aliphatischen und/oder cycloaliphatischen und/oder eines araliphatischen Di- und/oder Polyisocyanates mit einer mittleren Funktionalität von 2 bis 3 und mit einem Uretdiongruppengehalt von 20 bis 40 % und

(B3) ggf. mindestens einem von (B1) und (B2) verschiedenen aliphatischen und/oder cycloaliphatischen und/oder araliphatischen Di- oder Polyisocyanat

ist und

3.) es als Vernetzungsmittel (B) eine Mischung aus

(B1) 45 bis 89 Gew.-% der Komponente (B1),
(B2) 11 bis 55 Gew.-% der Komponente (B2) und
(B3) 0 bis 10 Gew.-% der Komponente (B3)

enthält, wenn das Acrylatharz (A) hergestellt worden ist unter Verwendung von mehr als 14 Gew.-%, bezogen auf das Gesamtgewicht der eingesetzten Monomeren (a) bis (f), hydroxylgruppenhaltiger, von (a1) verschiedener, Monomerer, oder daß es als Vernetzungsmittel (B) eine Mischung aus

(B1) 45 bis 100 Gew.-% der Komponente (B1),
(B2) 0 bis 55 Gew.-% der Komponente (B2) und
(B3) 0 bis 10 Gew.-% der Komponente (B3)

enthält, wenn das Acrylatharz (A) hergestellt worden ist unter Verwendung von maximal 14 Gew.-%, bezogen auf das Gesamtgewicht der eingesetzten Monomeren (a) bis (f), hydroxylgruppenhaltiger, von (a1) verschiedener, Monomerer.

Gegenstand der vorliegenden Erfindung ist ferner ein Verfahren zur Herstellung eines mehrschichtigen Überzuges auf einer Substratoberfläche unter Verwendung dieser Beschichtungsmittel sowie die Verwendung der Beschichtungsmittel im Bereich der Autoreparaturlackierung.

Es ist überraschend und war nicht vorhersehbar, daß sich die erfindungsgemäßen Beschichtungsmittel bei Verwendung als transparenter Decklack über einer Basislackschicht durch eine sehr gute Kratzfestigkeit sowie eine sehr gute Haftung auf der Basislackschicht auszeichnen. Vorteilhaft ist ferner, daß die Beschichtungsmittel zu Beschichtungen mit einer hohen Härte bei gleichzeitig guter Elastizität, sehr gutem Decklackstand, hoher Transparenz, gutem Glanz, guter Polierbarkeit sowie einer hohen Widerstandsfähigkeit gegen klimatische Einflüsse (wie z.B. Temperaturschwankungen, Feuchtigkeit in Form von Wasserdampf, Regen, Tau, Belastung durch Strahlung usw.) führen. Außerdem weisen die Beschichtungsmittel den Vorteil auf, daß sie gut verarbeitbar und bei niedrigen Temperaturen aushärtbar sind und damit im Bereich der Autoreparaturlackierung einsetzbar sind. Selbst bei Härtung der Beschichtungsmittel bei niedrigen Temperaturen härten die Beschichtungsmittel schnell aus, weisen dabei aber gleichzeitig eine lange Verarbeitbarkeit (Topfzeit) auf.

Im folgenden werden nun die einzelnen Bestandteile des erfindungsgemäßen Beschichtungsmittels näher erläutert. Das erfindungsgemäß eingesetzte Acrylatharz (A) ist erhältlich, indem

(a) 10 bis 51 Gew.-%, bevorzugt 10 bis 35 Gew.-%, einer Mischung aus

(a1) einem oder mehreren Monomeren, ausgewählt aus der Gruppe 4-Hydroxi-n-butylacrylat und/oder 4-Hydroxi-n-butylmethacrylat und/oder 3-Hydroxi-n-butylacrylat und/oder 3-Hydroxi-n-butylmethacrylat und

(a2) einem oder mehreren Monomeren, ausgewählt aus der Gruppe 3-Hydroxi-n-propylacrylat und/oder 3-Hydroxi-n-propylmethacrylat und/oder 2-Hydroxi-n-propylacrylat und/oder 2-Hydroxi-n-propylmethacrylat,

(b) 0 bis 20 Gew.-%, bevorzugt 0 bis 10 Gew.-%, eines von (a) verschiedenen hydroxylgruppenhaltigen Esters der Acrylsäure oder der Methacrylsäure mit mindestens 5 C-Atomen im Alkoholrest und/oder eines von (a) verschiedenen hydroxylgruppenhaltigen Esters einer polymerisierbaren ethylenisch ungesättigten Carbonsäure oder eines Gemisches aus solchen Monomeren,

(c) 28 bis 85 Gew.-%, bevorzugt 40 bis 70 Gew.-%, eines von (a) und (b) verschiedenen aliphatischen oder cycloaliphatischen Esters der Acrylsäure oder der Methacrylsäure mit mindestens 4 C-Atomen im Alkoholrest oder eines Gemisches aus solchen Monomeren,

(d) 0 bis 25 Gew.-%, bevorzugt 5 bis 20 Gew.-%, eines von (a), (b) und (c) verschiedenen vinylaromatischen Kohlenwasserstoffs oder eines Gemisches aus solchen Monomeren,

(e) 0 bis 5 Gew.-%, bevorzugt 1 bis 3 Gew.-%, einer ethylenisch ungesättigten Carbonsäure oder einer Mischung aus ethylenisch ungesättigten Carbonsäuren und

(f) 0 bis 20 Gew.-%, bevorzugt 0 bis 15 Gew.-%, eines von (a), (b), (c), (d) und (e) verschiedenen ethylenisch ungesättigten Monomeren oder eines Gemisches aus solchen Monomeren

zu einem Polyacrylatharz mit einer Hydroxylzahl von 60 bis 200, bevorzugt 80 bis 160 mgKOH/g, einer Säurezahl von 0 bis 35, bevorzugt 0 bis 25 mgKOH/g, und einem zahlenmittleren Molekulargewicht von 1000 bis 5000, bevorzugt von 1800 bis 3500 polymerisiert werden, wobei die Summe der Gewichtsanteile der Komponenten (a) bis (f) jeweils 100 Gew.-% beträgt.

Die Herstellung der erfindungsgemäß eingesetzten Polyacrylatharze kann nach allgemein gut bekannten Polymerisationsverfahren erfolgen. Polymerisationsverfahren zur Herstellung von Polyacrylatharzen sind allgemein bekannt und vielfach beschrieben (vgl. z.B.: Houben-Weyl, Methoden der organischen Chemie, 4. Auflage, Band 14/1, Seiten 24 bis 255 (1961)).

Die erfindungsgemäß eingesetzten Polyacrylatharze werden vorzugsweise mit Hilfe des Lösungspolymerisationsverfahrens hergestellt. Hierbei wird üblicherweise ein organisches Lösemittel bzw. Lösemittelgemisch vorgelegt und zum Sieden erhitzt. In dieses organische Lösemittel bzw. Lösemittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 160°C, vorzugsweise zwischen 130 und 150°C. Als Polymerisationsinitiatoren werden vorzugsweise freie Radikale bildende Initiatoren eingesetzt. Initiatorart und -menge werden üblicherweise so gewählt, daß bei der Polymerisationstemperatur während der Zulaufphase ein möglichst konstantes Radikalangebot vorliegt.

Als Beispiele für einsetzbare Initiatoren werden genannt: Di-tert.-Butylperoxid, tert.-Butylhydroperoxid, tert.-Butylperoxibenzoat, tert.-Butylperoxipivalat, tert.-Butylperoxi-3,5,5trimethylhexanoat, tert.-Butylperoxi-2-ethylhexanoat, Dicumylperoxid, Cumylhydroperoxid, tert.-Amylperoxibenzoat, tert.-Amylperoxi-2-ethylhexanoat, Diacylperoxide, wie z.B. Diacetylperoxid, Peroxiketale, 2,2-Di-(tert.-amylperoxi-)propan, Ethyl-3,3-di-(tert.-amylperoxi-)butyrat und thermolabile hochsubstituierte Ethanderivate, beispielsweise auf Basis silylsubstituierter Ethanderivate und auf Basis Benzpinakol. Weiterhin können auch aliphatische Azoverbindungen, wie beispielsweise Azoisovaleronitril und Azobiscyclohexannitril, eingesetzt werden.

Die Initiatormenge beträgt in den meisten Fällen 0,1 bis 8 Gew.-%, bezogen auf die zu verarbeitende Monomerenmenge, sie kann ggf. aber auch höher liegen. Der Initiator, gelöst in einem Teil des für die Polymerisation eingesetzten Lösungsmittels, wird allmählich während der Polymerisationsreaktion zudosiert. Bevorzugt dauert der Initiatorzulauf etwa 0,5 bis 2 Stunden länger als der Monomerenzulauf, um so auch eine gute Wirkung während der Nachpolymerisationsphase zu erzielen. Werden Initiatoren mit nur einer geringen Zerfallsrate unter den vorliegenden Reaktionsbedingungen eingesetzt, so ist es auch möglich, den Initiator vorzulegen.

Die Polymerisationsbedingungen (Reaktionstemperatur, Zulaufzeit der Monomerenmischung, Menge und Art der organischen Lösemittel und Polymerisationsinitiatoren, eventuelle Mitverwendung von Molekulargewichtsreglern, wie z.B. Mercaptanen, Thiolglykolsäureestern und Chlorwasserstoffen) werden so ausgewählt, daß die erfindungsgemäß eingesetzten Polyacrylatharze ein zahlenmittleres Molekulargewicht von 1 000 bis 5 000, vorzugsweise 1800 bis 3500 (bestimmt durch Gelpermeationschromatographie unter Verwendung von Polystyrol als Eichsubstanz) aufweisen.

Die Säurezahl der erfindungsgemäß eingesetzten Polyacrylatharze kann vom Fachmann durch Einsatz entsprechender Mengen der Komponente (e) eingestellt werden. Analoges gilt für die Einstellung der Hydroxylzahl. Sie ist über die Menge an eingesetzter Komponente (a) und (b) steuerbar.

Es ist erfindungswesentlich, daß als Komponente (a) eine Mischung aus

(a1) einem oder mehreren Monomeren, ausgewählt aus der Gruppe 4-Hydroxi-n-butylacrylat und/oder 4-Hydroxi-n-butylmethacrylat und/oder 3-Hydroxi-n-butylacrylat und/oder 3-Hydroxi-n-butylmethacrylat und

(a2) einem oder mehreren Monomeren, ausgewählt aus der Gruppe 3-Hydroxi-n-propylacrylat und/oder 3-Hydroxi-n-propylmethacrylat und/oder 2-Hydroxi-n-propylacrylat und/oder 2-Hydroxi-n-propylmethacrylat,

eingesetzt wird.

Bevorzugt wird als Komponente (a) eine Mischung aus

(a1) 10 bis 85 Gew.-%, bevorzugt 20 bis 65 Gew.-%, der Komponente (a1) und

(a2) 15 bis 90 Gew.-%, bevorzugt 35 bis 80 Gew.-%, der Komponente (a2)

eingesetzt, wobei die Summe der Gewichtsanteile der Komponenten (a1) und (a2) jeweils 100 Gew.-% beträgt.

Bevorzugt wird die Zusammensetzung der Komponente (a) so gewählt, daß bei alleiniger Polymerisation der Komponente (a) ein Polyacrylatharz mit einer Glasübergangstemperatur von -62°C bis +65°C, bevorzugt von -50°C bis +35°C, erhalten wird.

Die Glasübergangstemperatur kann vom Fachmann unter Zuhilfenahme der Formel

$$\frac{1}{T_G} = \sum_{n=1}^{n=x} \frac{W_n}{T_{Gn}}$$

$T_G =$     Glasübergangstemperatur des Polymeren
$x =$     Anzahl der verschiedenen einpolymerisierten Monomere,
$W_n =$     Gewichtsanteil des n-ten Monomers
$T_{Gn} =$     Glasübergangstemperatur des Homopolymers aus dem n-ten Monomer

näherungsweise berechnet werden.

Insbesondere kommt als Komponente (a) eine Mischung aus

(a1) 4-Hydroxi-n-butylacrylat und/oder 3-Hydroxi-n-butylacrylat und
(a2) 3-Hydroxi-n-propylmethacrylat und/oder 2-Hydroxi-n-propylmethacrylat

zum Einsatz.

Als weiteres hydroxylgruppenhaltiges Monomer (Komponente (b)) können zur Herstellung des Acrylatharzes ggf. noch weitere hydroxylgruppenhaltige Ester der Acrylsäure und/oder Methacrylsäure eingesetzt werden, bei denen der Alkoholrest mindestens 5 C-Atome aufweist. Beispiele für als Komponente (b) geeignete hydroxylgruppenhaltige Monomere sind insbesondere das Umsetzungsprodukt aus 1 mol Hydroxiethylacrylat und/oder Hydroxiethylmethacrylat und durchschnittlich 2 mol $\varepsilon$-Caprolacton und/oder das Umsetzungsprodukt aus Acrylsäure und/oder Methacrylsäure mit dem Glycidylester einer Carbonsäure mit einem tertiären $\alpha$-C-Atom. Diese Glycidylester von am $\alpha$-C-Atom verzweigten Carbonsäuren mit 11 bis 13 C-Atomen (Versaticsäure) sind beispielsweise unter dem Namen Cardura[®] der Firma Shell im Handel erhältlich. Die Umsetzung der Acryl- und/oder Methacrylsäure mit dem Glycidylester kann dabei vor, während oder nach der Polymerisation erfolgen.

Als Komponente (b) können aber auch Alkylester der Acrylsäure und/oder Methacrylsäure, wie z.B. Hydroxipentylacrylate und -methacrylate, Hydroxihexylacrylate und -methacrylate, Hydroxioctylacrylate und -methacrylate u.a., und/oder von (a) verschiedene hydroxylgruppenhaltige Ester einer polymerisierbaren ethylenisch ungesättigten Carbonsäure, wie z.B. die hydroxylgruppenhaltigen Ester der Croton- und Isocrotonsäure, eingesetzt werden.

Als Komponente (c) kann im Prinzip jeder von (a) und (b) verschiedene aliphatische oder cycloaliphatische Ester der Acrylsäure oder der Methacrylsäure mit mindestens 4 C-Atomen im Alkoholrest oder ein Gemisch aus solchen Monomeren eingesetzt werden. Als Beispiele werden genannt: aliphatische Ester der Acrylsäure und der Methacrylsäure mit 4 bis 20 C-Atomen im Alkoholrest, wie z.B. n-Butyl-, iso-Butyl-, tert.-Butyl, n-Hexyl-, 2-Ethylhexyl-, Stearyl- und Laurylacrylat sowie -methacrylate und cycloaliphatische Ester der (Meth)Acrylsäure wie z. B. Furfuryl-, Cyclohexyl-, Isobornyl-t-Butylcyclohexylacrylat und -methacrylat.

Die Zusammensetzung der Komponente (c) wird bevorzugt so ausgewählt, daß bei alleiniger Polymerisation der Komponente (c) ein Polymethacrylatharz mit einer Glasübergangstemperatur von -30 bis +100°C, vorzugsweise -10 bis + 90°C erhalten wird.

Als Komponente (d) werden vinylaromatische Kohlenwasserstoffe, wie Styrol, $\alpha$-Alkylstyrole, wie $\alpha$-Methylstyrole, Chlorstyrole, o-, m- und p-Methylstyrol, 2,5-Di-methylstyrol, p-Methoxistyrol, p-tert.-Butylstyrol, p-Dimethylaminostyrol, p-Acetamidostyrol und Vinyltoluol, eingesetzt, wobei bevorzugt Vinyltoluole und insbesondere Styrol eingesetzt werden.

Als Komponente (e) kann im Prinzip jede ethylenisch ungesättigte Carbonsäure oder eine Mischung aus ethylenisch ungesättigten Carbonsäuren eingesetzt werden. Als Komponente (e) werden vorzugsweise Acrylsäure und/oder Methacrylsäure eingesetzt.

Als Komponente (f) kann im Prinzip jedes von (a), (b), (c), (d) und (e) verschiedene ethylenisch ungesättigte Monomer oder ein Gemisch aus solchen Monomeren eingesetzt werden. Als Beispiele für Monomere, die als Komponente (f) eingesetzt werden können, werden genannt: Amide der Acrylsäure und Methacrylsäure, wie z.B. Methacrylamid und Acrylamid; Nitrile der Methacrylsäure und Acrylsäure; Vinylether und Vinylester.

Die Zusammensetzung der Komponente (e) wird vorzugsweise so ausgewählt, daß bei alleiniger Polymerisation der Komponente (e) ein Polymer mit einer Glasübergangstemperatur von +70 bis +185°C, vorzugsweise +80 bis +120°C erhalten wird.

Es ist ferner erfindungswesentlich, daß die erfindungsgemäßen Beschichtungsmittel als Vernetzungsmittel (B) eine Mischung aus

(B1) mindestens einem Polymerisat eines aliphatischen und/oder cycloaliphatischen und/oder eines araliphatischen Di- und/oder Polyisocyanates mit einer mittleren Funktionalität von 3 bis 4 und mit einem Uretdiongruppengehalt von maximal 5 %,

(B2) ggf. mindestens einem Polymerisat eines aliphatischen und/oder cycloaliphatischen und/oder eines araliphatischen Di- und/oder Polyisocyanates mit einer mittleren Funktionalität von 2 bis 3 und mit einem Uretdiongruppengehalt von 20 bis 40 % und

(B3) ggf. mindestens einem von (B1) und (B2) verschiedenen aliphatischen und/oder cycloaliphatischen und/oder araliphatischen Di- oder Polyisocyanat

enthalten.

Besonders bevorzugt ist ferner die Zusammensetzung der Härterkomponente (B) auf die Zusammensetzung des Acrylatharzes (A) abgestimmt:

Wenn das Acrylatharz (A) hergestellt worden ist unter Verwendung von mehr als 14 Gew.-%, bezogen auf das Gesamtgewicht der eingesetzten Monomeren (a) bis (f), hydroxylgruppenhaltiger, von (a1) verschiedener, Monomerer, (d.h. Monomerer ausgewählt aus der Gruppe Hydroxipropylmethacrylat und/oder Hydroxipropylacrylat und/oder der Komponente (b)), so wird bevorzugt als Komponente (B) eine Mischung aus

(B1) 45 bis 89 Gew.-% der Komponente (B1),

(B2) 11 bis 55 Gew.-% der Komponente (B2) und

(B3) 0 bis 10 Gew.-% der Komponente (B3)

eingesetzt.

Wenn das Acrylatharz (A) hergestellt worden ist unter Verwendung von maximal 14 Gew.-%, bezogen auf das Gesamtgewicht der eingesetzten Monomeren (a) bis (f), hydroxylgruppenhaltiger, von (a1) verschiedener, Monomerer, (d.h. Monomerer ausgewählt aus der Gruppe Hydroxipropylmethacrylat und/oder Hydroxipropylacrylat und/oder der Komponente (b)), so wird bevorzugt als Komponente (B) eine Mischung aus

(B1) 45 bis 100 Gew.-% der Komponente (B1),

(B2) 0 bis 55 Gew.-% der Komponente (B2) und

(B3) 0 bis 10 Gew.-% der Komponente (B3)

eingesetzt.

Bevorzugt werden in den erfindungsgemäßen Beschichtungsmitteln als Komponente (B1) und (B2) Polymerisate auf Basis von 3,5,5-Trimethyl-1-isocyanato-3-isocyanatomethylcyclohexan sowie insbesondere Polymerisate auf Basis von Hexamethylendiisocyanat eingesetzt.

Beispiele für als Komponente (B1) geeignete Isocyanatverbindungen sind die im Handel unter den folgenden Bezeichnungen erhältlichen Produkte:

Desmodur® N 3390 der Firma Bayer AG, eine 90%ige Lösung in eines Trimerisats auf Basis Hexamethylendiisocyanat mit einem zahlenmittleren Molekulargewicht von ca. 700, einer durchschnittlichen Funktionalität zwischen 3 und 4 und einem Uretdiongruppengehalt von maximal 5 %;

Tolonate® HD T90 der Firma Rhône Poulenc, ein Polymerisat auf Basis von Hexamethylendiisocyanat mit einer mittleren Funktionalität zwischen 3 und 4, einem Uretdiongruppengehalt von maximal 5,0 Gew.-% und einem Festkörpergehalt von 90 %.

Ein Beispiel für eine als Komponente (B2) geeignete Isocyanatverbindung ist das im Handel unter der folgenden Bezeichnung erhältliche Produkt:

Desmodur® N 3400 der Firma Bayer AG, ein Trimerisat auf Basis Hexamethylendiisocyanat mit einem zahlenmittleren Molekulargewicht von ca. 500, einer mittleren Funktionalität zwischen 2 und 3 und einem Uretdiongruppengehalt zwischen 30 und 40 %;

Ein Beispiel für eine als Komponente (B3) geeignete Isocyanatverbindung ist das im Handel unter der folgenden Bezeichnung erhältliche Produkt:

Desmodur® Z 4370 der Firma Bayer AG, eine 70%ige Lösung in eines Polyisocyanats auf Basis eines Isophorondiisocyanattrimerisats mit einer mittleren Funktionalität von 2,9 bis 3,7.

Ferner können als Komponente (B3) die folgenden Polyisocyanate eingesetzt werden:

Cycloaliphatische Isocyanate, wie z.B. 1,3-Cylcopentan-, 1,4-Cyclohexan-, 1,2-Cyclohexan und Isophorondiisocyanat; aliphatische Isocyanate, wie z.B. Trimethylen-, Tetramethylen-, Pentamethylen-, Hexamethylen-, Trimethylhexamethylen-1,6-diisocyanat und Tris-hexamethylen-triisocyanat.

Vorzugsweise werden Diisocyanate mit unterschiedlich reaktiven Isocyanatgruppen eingesetzt, wie z.B. Isophorondiisocyanat.

Die Menge des eingesetzten Vernetzers wird so gewählt, daß das Verhältnis der Isocyanatgruppen des Vernetzers zu den Hydroxylgruppen der Komponente (A) im Bereich von 1 : 3 bis 3 : 1 liegt. Üblicherweise enthalten die erfindungsgemäßen Beschichtungsmittel 15 bis 45 Gew.-% des Acrylatharzes (A) und 6 bis 20 Gew.-% des Vernetzungsmittels (B), jeweils bezogen auf das Gesamtgewicht des Beschichtungsmittels und bezogen auf den Festkörpergehalt der Komponenten (A) und (B).

Die erfindungsgemäßen Beschichtungsmittel können ferner ggf. ein oder mehrere weitere hydroxylgruppenhaltige Harze enthalten, wodurch beispielsweise die Lösemittelbeständigkeit und die Härte der resultierenden Beschichtung weiter verbessert werden. Beispielsweise können sie weitere, von dem obenbeschriebenen Acrylatharz (A) verschiedene hydroxylgruppenhaltige Acrylatharze und/oder Polykondensationsharze (insbesondere Polyester) enthalten.

Üblicherweise werden diese weiteren Bindemittel in einer Menge von 0 bis zu 25 Gew.-%, jeweils bezogen auf das Gesamtgewicht des Beschichtungsmittels und bezogen auf den Festkörpergehalt des Bindemittels, eingesetzt.

Beispiele für geeignete weitere Bindemittel sind beispielsweise die im Handel unter dem Namen Macrynal® SM 510 und SM 513 der Firma Hoechst erhältlichen Polyacrylatharze sowie die in der Deutschen Patentanmeldung DE-A-40 24 204 beschriebenen, in Gegenwart eines Polyesters hergestellten hydroxylgruppenhaltigen Polyacrylatharze. Wegen Einzelheiten sei auf die De-A-40 24 204, insbesondere die Seite 3, Zeile 18, bis Seite 7, Zeile 53, verwiesen.

Geeignet sind ferner hydroxylgruppenhaltige Polyacrylatharze, die erhältlich sind, indem

$(m_1)$    5 bis 80 Gew.-%, bevorzugt 5 bis 30 Gew.-%, eines cycloaliphatischen Esters der Methacrylsäure und/oder Acrylsäure oder eines Gemisches aus solchen Monomeren,

$(m_2)$    10 bis 50 Gew.-%, bevorzugt 15 bis 40 Gew.-%, eines hydroxylgruppenhaltigen Alkylesters der Methacrylsäure und/oder Acrylsäure oder eines Gemisches aus solchen Monomeren,

$(m_3)$    0 bis 25 Gew.-%, bevorzugt 0 bis 15 Gew.-%, eines von $(m_1)$ und $(m_2)$ verschiedenen hydroxylgruppenhaltigen, ethylenisch ungesättigten Monomeren oder eines Gemisches aus solchen Monomeren,

$(m_4)$    5 bis 80 Gew.-%, bevorzugt 5 bis 30 Gew.-%, eines von $(m_1)$, $(m_2)$ und $(m_3)$ verschiedenen aliphatischen Esters der Methacryl- und/oder Acrylsäure oder eines Gemisches aus solchen Monomeren,

$(m_5)$    0 bis 40 Gew.-%, bevorzugt 10 bis 30 Gew.-%, eines von $(m_1)$, $(m_2)$, $(m_3)$ und $(m_4)$ verschiedenen vinylaromatischen Kohlenwasserstoffes oder eines Gemisches aus solchen Monomeren und

$(m_6)$    0 bis 40 Gew.-%, bevorzugt 0 bis 30 Gew.-%, eines von $(m_1)$, $(m_2)$, $(m_3)$, $(m_4)$ und $(m_5)$ verschiedenen weiteren ethylenisch ungesättigten Monomeren oder eines Gemisches aus solchen Monomeren,

zu einem Polyacrylatharz mit einem zahlenmittleren Molekulargewicht Mn von 1000 bis 5000, einem Verhältnis von gewichtsmittlerem Molekulargewicht Mw zu zahlenmittlerem Molekulargewicht Mn von weniger als 5,0, bevorzugt von 1,8 bis 4,0 und einer OH-Zahl von 60 bis 180, bevorzugt von 100 bis 150 mgKOH/g polymerisiert werden, wobei die Summe der Gewichtsanteile der Komponenten $(m_1)$ bis $(m_6)$ stets 100 Gew.-% beträgt und wobei als Komponente $(m_2)$ nur Monomere oder Mischungen von Monomeren eingesetzt werden, die bei alleiniger Polymerisation des jeweiligen Monomers ein Polyacrylat- und/oder Polymethacrylatharz mit einer Glasübergangstemperatur von -10°C bis +6°C oder von +60°C bis 80°C ergeben.

Als Komponente $(m_2)$ wird bevorzugt 3-Hydroxipropylmethacrylat und/oder 2-Hydroxipropylmethacrylat und/oder 3-Hydroxipropylacrylat und/oder 2-Hydroxipropylacrylat eingesetzt. Beispiele für die als Komponenten $(m_1)$ sowie $(m_3)$

bis ($m_6$) geeignete Monomeren sind die bei der Beschreibung des erfindungsgemäß eingesetzten Acrylatharzes (A) beschriebenen Monomeren.

Die erfindungsgemäßen Beschichtungsmittel enthalten ferner ein oder mehrere organische Lösungsmittel. Diese Lösungsmittel werden üblicherweise in Mengen von 20 bis 70 Gew.-%, bevorzugt von 25 bis 65 Gew.-%, jeweils bezogen auf das Gesamtgewicht des Beschichtungsmittels, eingesetzt.

Beispiele für geeignete Lösungsmittel sind höher substituierte Aromaten, wie z.B. Solvent Naphtha, Schwerbenzol, verschiedene Solvesso®-Typen, verschiedene Shellsol®-Typen und Deasol® sowie höhersiedende aliphatische und cycloaliphatische Kohlenwasserstoffe, wie z.B. verschiedene Testbenzine, Mineralterpentinöl, Tetralin und Dekalin sowie verschiedene Ester, wie z.B. Ethylglykolacetat, Butylglykolacetat, Ethyldiglykolacetat u.ä..

Die erfindungsgemäßen Beschichtungsmittel können außerdem übliche Hilfs- und Zusatzstoffe in üblichen Mengen, bevorzugt 0,01 bis 10 Gew.-%, bezogen auf das Gesamtgewicht des Beschichtungsmittel, enthalten. Beispiele für geeignete Hilfs- und Zusatzstoffe sind Verlaufsmittel, wie Silikonöle, Weichmacher, wie Phosphorsäureester und Phthalsäureester, viskositätskontrollierende Zusätze, Mattierungsmittel, UV-Absorber, Lichtschutzmittel und ggf. Füllstoffe.

Die Herstellung der Beschichtungsmittel erfolgt in bekannter Weise duch Mischen und ggf. Dispergieren der einzelnen Komponenten.

Diese Beschichtungsmittel können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird.

Die Aushärtung dieser Beschichtungsmittel erfolgt üblicherweise bei Raumtemperatur oder leicht erhöhter Temperatur, bevorzugt bei leicht erhöhter Temperatur, vorteilhafterweise bei Temperaturen unterhalb von 120°C, bevorzugt bei Temperaturen unterhalb von 80°C sowie bevorzugt bei Temperaturen oberhalb von 60°C. Die Beschichtungsmittel können aber auch unter Einbrennbedingungen, d.h. bei Temperaturen von mindestens 120°C, gehärtet werden. In diesem Fall ist aber darauf zu achten, daß die Vernetzerkomponente keine Polyisocyanate (B2) enthält.

Als Substrate eignen sich insbesondere Metalle sowie Holz, Kunststoff, Glas u.ä..

Aufgrund der kurzen Härtungszeiten und niedrigen Härtungstemperaturen werden die erfindungsgemäßen Beschichtungsmittel bevorzugt für die Autoreparaturlackierung, die Lackierung von Großfahrzeugen und LKW-Aufbauten verwendet. Sie können aber - je nach eingesetztem Vernetzer - auch für die Automobilserienlackierung eingesetzt werden. Des weiteren eignen sie sich insbesondere als Klarlack.

Gegenstand der vorliegenden Erfindung ist daher auch ein Verfahren zur Herstellung eines mehrschichtigen schützenden und/oder dekorativen Überzuges auf einer Substratoberfläche, bei dem

(1) ein pigmentierter Basislack auf die Substratoberfläche aufgebracht wird,
(2) aus dem in Stufe (1) aufgebrachten Basislack ein Polymerfilm gebildet wird,
(3) auf die so erhaltene Basisschicht ein transparenter Decklack, der

(A) ein hydroxylgruppenhaltiges Polyacrylatharz und
(B) ein Vernetzungsmittel

enthält, aufgebracht wird und anschließend
(4) Basislackschicht und Decklackschicht zusammen gehärtet werden,

dadurch gekennzeichnet, daß als Decklack das erfindungsgemäße Beschichtungsmittel eingesetzt wird.

Die in diesem Verfahren eingesetzten Basislacke sind bekannt und brauchen daher nicht näher erläutert zu werden. Beispiele für geeignete Basislacke sind auch die in der DE-OS 41 10 520, DE-OS 40 09 000, der DE-OS-40 24 204, der EP-A-355433, der DE-OS 35 45 618, der DE-OS 38 13 866 und der nicht vorveröffentlichten deutschen Patentanmeldung P 42 32 717.2 beschriebenen Basislacke.

Geeignet sind außerdem die in der noch nicht veröffentlichten deutschen Patentanmeldung P 43 27 416.1 beschriebenen Basislacke, die dadurch gekennzeichnet sind, daß sie einen hydroxylgruppenhaltigen Polyester mit einem gewichtsmittleren Molekulargewicht Mw von 40.000 - 200.000 und eine Uneinheitlichkeit Mw/ Mn > 8 enthalten und daß zur Herstellung-des Polyesters mindestens 50 Gew.-% aromatische Dicarbonsäuren oder deren veresterungsfähige Derivate eingesetzt worden sind, wobei aber der Gehalt an Phthalsäureanhydrid maximal 80 Gew.-% beträgt und wobei die Gew.-%-Angaben jeweils auf das Gesamtgewicht der zur Herstellung des Polyesters eingesetzten Säurekomponenten bezogen sind.

Mit dem erfindungsgemäßen Beschichtungsmittel können auch oxidativ trocknende, pigmentierte oxidativ trocknende sowie pigmentierte 2K-Polyurethanlacke, die üblicherweise im Bereich der ggf. einschichtigen Autoreparaturlackierung eingesetzt werden, überlackiert werden. Auch in diesem Falle werden Beschichtungen mit den gewünschten vorteilhaften Eigenschaften erhalten.

Die erfindungsgemäßen Beschichtungsmittel zeichnen sich insbesondere durch eine gute Haftung auf der Basislackschicht, eine gute Kratzfestigkeit und hohe Härte der resultierenden Beschichtungen aus. Daneben weisen die Beschichtungsmittel eine schnelle Trocknung bei gleichzeitig langer Verarbeitbarkeit (Topfzeit) aus. Weiterhin zeigen die resultierenden Beschichtungen, insbesondere im Fall der Klarlackbeschichtungen, gute mechanische Eigenschaften, wie beispielsweise eine gute Glanzhaltung, eine gute Fülle, einen guten Verlauf und einen guten Decklackstand.

Die Erfindung wird nun anhand von Ausführungsbeispielen näher erläutert. Alle Angaben über Teile und Prozente sind dabei Gewichtsangaben, falls nicht ausdrücklich etwas anderes angegeben wird.

## I. Herstellung der hydroxylgruppenhaltigen Acrylatharze E1 bis E4 und V1 bis V2

Die zur Herstellung der hydroxylgruppenhaltigen Acrylatharze eingesetzten Monomeren sind in Tabelle 1 zusammengefaßt. Die zahlenmittleren und die gewichtsmittleren Molekulargewichte wurden durch GPC- Messungen gegen Polystyrolstandard bestimmt. Das eingesetzte Hydroxi-n-propylmethacrylat stellte eine handelsübliche Mischung aus 25 Gew.-% 3-Hydroxi-n-propylmethacrylat und 75 Gew.-% 2-Hydroxi-n-propylmethacrylat dar. Die Eigenschaften der resultierenden Acrylatharze sind in Tabelle 2 dargestellt.

### I.1. Herstellung des hydroxylgruppenhaltigen Acrylatharzes E1

In einem für Polymerisationsreaktionen geeigneten 4 l Reaktor wurden 1164 g Solventnaphtha[®] (aromatisches Lösemittelgemisch mit einem Siedebereich von 160 bis 185°C) vorgelegt und unter Stickstoff und Rühren auf 140°C aufgeheizt. Zu dieser Vorlage dosierte man gleichzeitig beginnend innerhalb von 4 h gleichmäßig eine Monomerenmischung aus 180 g Styrol, 1121,4 g Butylmethacrylat, 180 g Hydroxipropylmethacrylat, 280.8 g 4-Hydroxibutylacrylat und 31,8 g Acrylsäure sowie innerhalb von 4,75 h eine Mischung aus 108 g tert.-Butylperoxiethylhexanoat und 108 g Solventnaphtha[®]. Nach der Beendigung des Initiatorzulaufes wurde 2 h nachpolymerisiert. Das fertige Polyacrylatharz weist einen Festkörper von 57.6% (130°C 1h), eine säurezahl von 17,3 und eine Originalviskosität von 7.0 dPa.s auf (Mn = 2192; Mw = 5740).

### I.2. Herstellung des hydroxylgruppenhaltigen Acrylatharzes E2

In einem für Polymerisationsreaktionen geeigneten 4 l Reaktor wurden 1164 g Solventnaphtha[®] vorgelegt und unter Stickstoff und Rühren auf 140°C aufgeheizt. Zu dieser Vorlage dosierte man gleichzeitig beginnend innerhalb von 4 h gleichmäßig eine Monomerenmischung aus 180 g Styrol, 1121,4 g Butylmethacrylat, 360 g Hydroxipropylmethacrylat, 100.8 g 4-Hydroxibutylacrylat und 37,8 g Acrylsäure sowie innerhalb von 4,75 h eine Mischung aus 108 g tert.-Butylperoxiethylhexanoat und 108 g Solventnaphtha[®]. Nach der Beendigung des Initiatorzulaufes wurde 2 h nachpolymerisiert. Das fertige Polyacrylatharz weist einen Festkörper von 57.6% (130°C 1h), eine Säurezahl von 17,6 und eine Originalviskosität von 12.8 dPa.s auf (Mn = 2166; Mw = 6115).

### I.3. Herstellung des hydroxylgruppenhaltigen Acrylatharzes E3

In einem für Polymerisationsreaktionen geeigneten 4 l Reaktor wurden 1164 g Solventnaphtha[®] vorgelegt und unter Stickstoff und Rühren auf 140°C aufgeheizt. Zu dieser Vorlage dosierte man gleichzeitig beginnend innerhalb von 4 h gleichmäßig eine Monomerenmischung aus 180 g Styrol, 1121,4 g Butylmethacrylat, 270 g Hydroxipropylmethacrylat, 191 g 4-Hydroxibutylacrylat und 37,8 g Acrylsäure sowie innerhalb von 4,75 h eine Mischung aus 108 g tert.-Butylperoxiethylhexanoat und 108 g Solventnaphtha[®]. Nach der Beendigung des Initiatorzulaufes wurde 2 h nachpolymerisiert. Das fertige Polyacrylatharz weist einen Festkörper von 56.6% (130°C 1h), eine Säurezahl von 17,6 und eine Originalviskosität von 7.8 dPa.s auf (Mn = 2150; Mw = 5900).

### I.4. Herstellung des hydroxylgruppenhaltigen Acrylatharzes V1

In einem für Polymerisationsreaktionen geeigneten 4 l Reaktor wurden 1003 g Solventnaphtha[®] vorgelegt und unter Stickstoff und Rühren auf 140°C aufgeheizt. Zu dieser Vorlage dosierte man gleichzeitig beginnend innerhalb von 4 h gleichmäßig eine Monomerenmischung aus 180 g Styrol, 1121,4 g Butylmethacrylat, 460.8 g Hydroxibutylacrylat und 37,8 g Acrylsäure sowie innerhalb von 4,75 h eine Mischung aus 108 g tert.-Butylperoxiethylhexanoat und 108 g Solventnaphtha[®]. Nach der Beendigung des Initiatorzulaufes wurde 2 h nachpolymerisiert. Das fertige Polyacrylatharz weist einen Festkörper von 59.1% (130°C 1h), eine Säurezahl von 16,5 und eine Originalviskosität von 6.6 dPa.s auf (Mn = 2241; Mw = 7211).

I.5. Herstellung des hydroxylgruppenhaltigen Acrylatharzes V2

In einem für Polymerisationsreaktionen geeigneten 4 l Reaktor wurden 1358 g Solventnaphtha® vorgelegt und unter Stickstoff und Rühren auf 140°C aufgeheizt. Zu dieser Vorlage dosierte man gleichzeitig beginnend innerhalb von 4 h gleichmäßig eine Monomerenmischung aus 210 g Styrol, 1308 g Butylmethacrylat, 538 g Hydroxipropylmethacrylat und 44 g Acrylsäure sowie innerhalb von 4,75 h eine Mischung aus 126 g tert.-Butylperoxiethylhexanoat und 126 g Solventnaphtha®. Nach der Beendigung des Initiatorzulaufes wurde 2 h nachpolymerisiert. Das fertige Polyacrylatharz weist einen Festkörper von 56.2% (130°C 1h), eine Säurezahl von 18,7 und eine Originalviskosität von 22.5 dPa.s auf (Mn = 2346; Mw = 8856).

I.6. Herstellung des hydroxylgruppenhaltigen Acrylatharzes E4

In einem für Polymerisationsreaktionen geeigneten 4 l Reaktor wurden 1164 g Solventnaphtha® vorgelegt und unter Stickstoff und Rühren auf 140°C aufgeheizt. Zu dieser Vorlage dosierte man gleichzeitig beginnend innerhalb von 4 h gleichmäßig eine Monomerenmischung aus 180 g tert.-Butylcyclohexylacrylat, 1121 g Butylmethacrylat, 360 g Hydroxipropylmethacrylat, 101 g Hydroxibutylacrylat und 38 g Acrylsäure sowie innerhalb von 4,75 h eine Mischung aus 108 g tert.-Butylperoxiethylhexanoat und 108 g Solventnaphtha®. Nach der Beendigung des Initiatorzulaufes wurde 2 h nachpolymerisiert. Das fertige Polyacrylatharz weist einen Festkörper von 56.3% (130°C 1h), eine Säurezahl von 17,6 und eine Originalviskosität von 5,3dPa.s auf (Mn = 1909; Mw = 4963).

II. Herstellung der Beschichtungsmittel E1 bis E4 und V1 bis V2 (Vergleichsbeispiele)

II.1. Herstellung der Härterlösungen 1 bis 4

Aus den nachfolgend angegebenen Komponenten werden durch Mischen die Härterlösungen hergestellt:

| Härter | E1 | E2 | E3 | E4 |
|---|---|---|---|---|
| Butylacetat 98%ig | 49,0 | 49,0 | 49,0 | 44,5 |
| Butylglykolacetat | 6,0 | 6,0 | 6,0 | 6,0 |
| Katalysatorlosung[1] | 1,5 | 1,5 | 1,5 | 1,5 |
| Desmodur® N 3400[2] | 19,5 | 10,0 | 5,0 | - |
| Desmodur® N 3390[3] | 24,0 | 33,5 | 38,5 | 48 |
| Festkörper (%) | 41 | 40 | 40 | 44 |

[1] unter Punkt II.3. beschriebene Katalysatorlösung
[2] Handelsübliches, wasserverdünnbares Polyisocyanat der Firma Bayer AG auf Basis eines Hexamethylendiisocyanat-Di-/Trimerisates mit einem zahlenmittleren Molekulargewicht von ca. 500, einer mittleren Funktionalität zwischen 2 und 3 und einem Uretdiongruppengehalt zwischen 30 und 40 %;
[3] Handelsübliches Polyisocyanat der Firma Bayer AG, eine 90%ige Lösung in Butylacetat/Solventnaphtha 1:1 eines Trimerisats auf Basis Hexamethylendiisocyanat mit einem zahlenmittleren Molekulargewicht von ca. 700, einer durchschnittlichen Funktionalität zwischen 3 und 4 und einem Uretdiongruppengehalt von maximal 5 %;

II.2. Herstellung eines Einstellzusatzes

Aus den nachfolgend angegebenen Komponenten wird durch Mischen ein Einstellzusatz hergestellt:

| Xylol | 20,0 |
|---|---|
| Solventnaphta® | 15,0 |
| Benzin 135/180 | 10,0 |
| Butylgykolacetat | 5,0 |
| Butylacetat | 50,0 |

II.3. Herstellung einer Katalysatorlösung

1,0 Teile Dibutylzinndilaurat werden mit 99,0 Teilen Butylacetat 98/100 gemischt.

II.4. Herstellung einer Verlaufsmittellösung

5,0 Teile eines handelsüblichen Verlaufsmittels auf Basis eines polyethermodifizierten Methylpolysiloxans (Handelsprodukt Baysilone OL 44 der Firma Bayer AG) und 95,0 Teile Xylol werden gemischt.

II.5. Herstellung der Klarlacklösungen E1 bis E4 und V1 bis V2

Aus den in Tabelle 3 angegebenen Komponenten werden die Klarlacklösungen durch Vermischen hergestellt.

II.6. Herstellung der transparenten Decklacke E1 bis E4 und V1 bis V2 (Vergleichsbeispiele)

Die transparenten Decklacke werden dadurch hergestellt, daß jeweils 100 Volumenteile der Klarlacklösungen E1 bis E4 bzw. V1 bis V2 mit 50 Volumenteilen der obenbeschriebenen Härterlösungen E1 bis E4 und 30 Volumenteilen des obenbeschriebenen Einstellzusatzes gemischt werden. Die Zusammensetzung der Decklacke ist in den Tabellen 4 bis 8 dargestellt.
Der so erhaltene Lack wird dann auf phosphatierte und beschichtete Stahlbleche appliziert. Die phosphatierten Stahlbleche werden hierzu mit einem handelsüblichen konventionellen Füller (Handelsprodukt Glasurit Grundfüller 801-1552 der Firma Glasurit GmbH, Münster) mit einem Bindemittel auf Basis eines epoxidgruppenhaltigen Bindemittels und einem aminofunktionellen Härter beschichtet, 20 min bei 80°C und 24 h bei Raumtemperatur getrocknet und anschließend mit einem handelsüblichen konventionellen Metallic-Basislack (Handelsprodukt Basislack 54 A 926 der Firma Glasurit GmbH, Münster) auf Basis eines hydroxylgruppenhaltigen Polyesters, Celluloseacetobutyrat, Wachs und eines Melaminharzes beschichtet. Nach einer Ablüftzeit von 30 min wird der Klarlack appliziert. Die Tafeln werden dann 30 min bei 60°C und 16 h bei Raumtemperatur getrocknet.
Die Ergebnisse der Prüfung der resultierenden Beschichtungen sind in den Tabellen 4 bis 8 dargestellt.

Tabelle 1

| Zusammensetzung der Acrylatharze in Gew.-% | | | | | | |
|---|---|---|---|---|---|---|
| | E1 | V1 | V2 | E2 | E3 | E4 |
| Styrol | 10 | 10 | 10 | 10 | 10 | - |
| t-Butylcyclohexylacrylat | - | - | - | - | - | 10 |
| n-Butylmethacrylat | 62,3 | 62,3 | 62,3 | 62,3 | 62,3 | 62,3 |
| 4-Hydroxi-n-butylacrylat | 15,6 | 25,6 | - | 5,6 | 10,6 | 15,6 |
| 3-Hydroxi-n-propylmethacrylat | 10,0 | - | 25,6 | 20,0 | 15,0 | 10 |
| Acrylsäure | 2,1 | 2,1 | 2,1 | 2,1 | 2,1 | 2,1 |

Tabelle 2

| Eigenschaften der Acrylatharze | | | | | | |
|---|---|---|---|---|---|---|
| | E1 | V1 | V2 | E2 | E3 | E4 |
| OH-Zahl [mgKOH/g] | 100 | 100 | 100 | 100 | 100 | 100 |
| Säurezahl [mgKOH/g] | 17,3 | 16,5 | 18,7 | 17,6 | 17,6 | 17,6 |
| $M_n$ | 2192 | 2241 | 2346 | 2166 | 2150 | 1909 |
| $M_w$ | 5740 | 7211 | 8856 | 6115 | 5900 | 4963 |
| $M_n/M_w$ | 2,6 | 3,2 | 3,8 | 2,8 | 2,7 | 2,6 |
| Tg (°C) | + 13,6 | - 1,3 | + 40,5 | + 30,3 | + 21,7 | +28,4 |
| Tg (c) (°C) | 20 | 20 | 20 | 20 | 20 | +26,0 |
| Tg (a) (°C) | - 26,6 | - 65 | + 73 | + 29,1 | - 1,6 | +29,1 |
| η [dPas.s] | 7,0 | 6,6 | 22,5 | 12,8 | 7,8 | 5,3 |
| FK [%] | 57,6 | 59,1 | 56,2 | 57,6 | 56,6 | 56,3 |

Tabelle 3

| Zusammensetzung der Klarlacklösungen in Gewichtsteilen | | | | | | |
|---|---|---|---|---|---|---|
| | V1 | V2 | E1 | E2 | E3 | E4 |
| Acrylat V 1[1] | 90.- | - | - | - | - | - |
| AcrylatV 2[1] | - | 90,- | - | - | - | - |
| AcrylatE 1[1] | - | - | 90,- | - | - | - |
| Acrylat E 2[1] | - | - | - | 90,- | - | - |
| Acrylat E 3[1] | - | - | - | - | 90,- | - |
| Acrylat E 4[1] | - | - | - | - | - | 90,- |
| Tinuvin 292[2] | 0,9 | 0,9 | 0,9 | 0,9 | 0,9 | 0,9 |
| Tinuvin 1130[3] | 0,9 | 0,9 | 0,9 | 0,9 | 0,9 | 0,9 |
| DBTL-Lösung[4] | 2,0 | 2,0 | 2,0 | 2,0 | 2,0 | 2,0 |
| Verlaufsmittellsg.[5] | 3,8 | 3,8 | 3,8 | 3,8 | 3,8 | 3,8 |
| Butylglycolacetat | 2,4 | 2,4 | 2,4 | 2,4 | 2,4 | 2,4 |
| Festkörper | 55% | 52% | 54% | 54% | 53% | 53% |

Erläuterungen zu Tabelle 3

[1] unter Punkt I.1 bis I.6. beschriebene Acrylatharzlösungen

[2] handelsübliches Lichtschutzmittel der Firma Ciba Geigy auf Basis eines sterisch gehinderten Amins (HALS)

[3] handelsübliches Lichtschutzmittel der Firma Ciba Geigy auf Basis Benztriazol

[4] unter Punkt II.3. beschriebene Katalysatorlösunglösung

[5] unter Punkt II.4. beschriebene Verlaufsmittellösung

Tabelle 4

| Zusammensetzung der Beschichtungsmittel auf Basis der Klarlacklösung E1 und Eigenschaften der resultierenden Beschichtungen | | | | | |
|---|---|---|---|---|---|
| **Beispiel** | | **1** | **2** | **3** | **4** |
| Klarlacklösung E1 | | 100 | 100 | 100 | 100 |
| Einstellzusatz | | 30 | 30 | 30 | 30 |
| Härter[1] | E1 | 50 | - | - | - |
| | E2 | - | 50 | - | - |
| | E3 | - | - | 50 | - |
| | E4 | - | - | - | 50 |
| Viskosität [s][2] | | 15 | 15 | 16 | 17 |
| Viskosität nach 2h [s][2] | | 17 | 17 | 18 | 19 |
| Kratztest[3] | | < 1 | 7 | 8 | 24 |
| Gitterschnitt[4] | | Gt2 | Gt2 | Gt2 | Gt2 |
| Härte[5] | | 3B | 3B-2B | 3B-2B | 3B-2B |
| Volvotest[6] | | m1/g1 | m1/g1 | m1/g1 | m1/g1 |
| Decklackstand[7] | | i.O. | i.O. | i.O. | i.O. |

Tabelle 5

| Zusammensetzung der Beschichtungsmittel auf Basis der Klarlacklösung E2 und Eigenschaften der resultierenden Beschichtungen | | | | | |
|---|---|---|---|---|---|
| **Beispiel** | | **5** | **6** | **7** | **8 (Vgl.)** |
| Klarlacklösung E2 | | 100 | 100 | 100 | 100 |
| Einstellzusatz | | 30 | 30 | 30 | 30 |
| Härter[1] | E1 | 50 | - | - | - |
| | E2 | - | 50 | - | - |
| | E3 | - | - | 50 | - |
| | E4 | - | - | - | 50 |
| Viskosität [s][2] | | 15 | 15 | 16 | 17 |
| Viskosität nach 2h [s][2] | | 17 | 17 | 18 | 19 |
| Kratztest[3] | | 5 | 8 | 18 | 40 |
| Gitterschnitt[4] | | Gt1 | Gt1-2 | Gt1-2 | Gt1 |
| Härte[5] | | 2B-3B | 2B | 2B | 2B-B |
| Volvotest[6] | | m1/g1 | m1/g1 | m1/g1 | m1/g1 |
| Decklackstand[7] | | i.O. | i.O. | i.O. | i.O. |

Tabelle 6

| Zusammensetzung der Beschichtungsmittel auf der Klarlacklösung E3 und Eigenschaften der resultierenden Beschichtungen | | | | | |
|---|---|---|---|---|---|
| **Beispiel** | | **9** | **10** | **11** | **12 (Vgl.)** |
| Klarlacklösung E3 | | 100 | 100 | 100 | 100 |
| Einstellzusatz | | 30 | 30 | 30 | 30 |
| Härter[1] | E1 | 50 | - | - | - |
| | E2 | - | 50 | - | - |
| | E3 | - | - | 50 | - |
| | E4 | - | - | - | 50 |
| Viskosität [s][2] | | 15 | 15 | 16 | 17 |
| Viskosität nach 2h [s][2] | | 17 | 17 | 18 | 19 |
| Kratztest[3] | | 1 | 8 | 13 | 28 |
| Gitterschnitt[4] | | Gt1-2 | Gt1-2 | Gt1-2 | Gt1 |
| Härte[5] | | 2B-3B | 2B | 2B | 2B-B |
| Volvotest[6] | | m1/g1 | m1/g1 | m1/g1 | m1/g1 |
| Decklackstand[7] | | i.O. | i.O. | i.O. | i.O. |

Tabelle 7

| Zusammensetzung der Beschichtungsmittel auf Basis der Klarlacklösung E4 und Eigenschaften der resultierenden Beschichtungen | | | | | |
|---|---|---|---|---|---|
| **Beispiel** | | **13** | **14** | **15** | **16** |
| Klarlacklösung E4 | | 100 | 100 | 100 | 100 |
| Einstellzusatz | | 30 | 30 | 30 | 30 |
| Härter[1] | E1 | 50 | - | - | - |
| | E2 | - | 50 | - | - |
| | E3 | - | - | 50 | - |
| | E4 | - | - | - | 50 |
| Viskosität [s][2] | | 14 | 14 | 15 | 16 |
| Viskosität nach 2h [s][2] | | 15 | 15 | 17 | 17 |
| Kratztest[3] | | 3 | 3 | 4 | 6 |
| Gitterschnitt[4] | | Gt1 | Gt1 | Gt1 | Gt1 |
| Härte[5] | | 2B-3B | 2B-3B | 2B-3B | 2B-B-3B |
| Volvotest[6] | | m1/g1 | m1/g1 | m1/g1 | m1/g1 |
| Decklackstand[7] | | i.O. | i.O. | i.O. | i.O. |

Tabelle 8

| Zusammensetzung der Beschichtungsmittel auf Basis der Klarlacklösung V1 und V2 und Eigenschaften der resultierenden Beschichtungen | | | | | | | | | |
|---|---|---|---|---|---|---|---|---|---|
| Beispiel | | V1 | V2 | V3 | V4 | V5 | V6 | V7 | V8 |
| Klarlacklösung V1 | | 100 | 100 | 100 | 100 | - | - | - | - |
| Klarlacklösung V2 | | - | - | - | - | 100 | 100 | 100 | 100 |
| Einstellzusatz | | 30 | 30 | 30 | 30 | 30 | 30 | 30 | 30 |
| Härter[1] | E1 | 50 | - | - | - | 50 | - | - | - |
| | E2 | - | 50 | - | - | - | 50 | - | - |
| | E3 | - | - | 50 | - | - | - | 50 | - |
| | E4 | - | - | - | 50 | - | - | - | 50 |
| Viskosität [s][2] | | 15 | 15 | 16 | 17 | 14 | 15 | 15 | 17 |
| Viskosität nach 2h [s][2] | | 18 | 19 | 20 | 23 | 17 | 17 | 18 | 19 |
| Kratztest[3] | | < 1 | < 1 | < 1 | < 1 | 78 | 80 | 83 | 84 |
| Gitterschnitt[4] | | Gt5 | Gt5 | Gt5 | Gt5 | Gt0-1 | Gt1 | Gt1 | Gt0-1 |
| Härte[5] | | > 3B | > 3B | > 3B | > 3B | B | HB-B | HB-B | HB-B |
| Volvotest[6] | | m1/g1 | m1/g1 | m1/g1 | m1/g1 | m1/g1 | m1/g1 | m1/g1 | m1/g1 |
| Decklackstand[7] | | i.O. | i.O. | i.O. | i.O. | i.O. | i.O. | i.O. | i.O. |

Erläuterungen zu den Tabellen 4 bis 8

Die in den Tabellen 4 bis 8 angeführten Prüfungen werden folgendermaßen durchgeführt:

[1] unter Punkt II.1. beschriebene Härterlösungen

[2] Viskosität, gemessen als Auslaufzeit im DIN 4 Becher direkt sowie 2 h nach Herstellung des Beschichtungsmittels

[3] Die Kratzfestigkeit wurde bestimmt mit Hilfe eines Stahlzylinders von 2 kg Gewicht, der auf der Unterseite mit einer 2 cm dicken Gummischeibe mit 4,5 cm Durchmesser versehen wird, das wiederum auf der Unterseite mit einem Nylongewebe mit ca. 30 $\mu$m Maschenweite überzogen ist. Der Zylinder wird senkrecht auf die zu testende Lacktafel gestellt. Die gesamte Konstruktion ist mit einer Stange, knapp oberhalb der Gummischeibe mit einer Exenterscheibe verbunden, die über einen Motor angetrieben wird. Die Größe der Scheibe ist so gewählt. daß ein ca. 10-15 cm langer Weg parallel zur Oberfläche der Testtafel erzeugt wird.

Durchführung:

Die Prüfung erfolgt mit Hilfe der obenbeschriebenen, beschichteten Stahlbleche mit einer Größe von ca. 10x20 cm. Die Testtafel wird mit ca. 0,5 ml einer tensidhaltigen, wäßrigen Lösung benetzt. Anschließend wird der Testzylinder aufgesetzt. Es werden innerhalb von ca. 80 s 80 Doppelhübe über die Oberfläche gefahren. Anschließend wird nach 1h unter 20° Beobachtungswinkel zur Oberfläche der DL Wert senkrecht zur Bewegungsrichtung des Zylinders gemessen (DL Wert nach DIN6174 gemessen, Normlichtart D, 3 Winkelmeßgerät MMK111 der Firma Datacolor).

[4] Der Gitterschnitt wurde bestimmt, indem auf der gereinigten, fettfreien Testtafel ein 1 mm langer Kreuzschnitt mit dem automatischen Gitterschnittgerät Model 430 der Firma Erichsen GmbH, Hemer-Sundwig, Deutschland appliziert wird. Die Schnittstelle wird mit einer Bürste gereinigt. Mit dem Holzspatel wird Tesaband® 4651 angedruckt und mit einem Ruck entfernt. Die Auswertung erfolgt nach DIN 53151.

[5] Die Bleistifthärte wurde mit Bleistiften der Firma Faber Castell, Deutschland bestimmt.

Die Bleistiftspitzen werden hierzu auf Schleifpapier P400 im Winkel von ca. 90° flach angeschliffen. Von Hand werden dann in einem Winkel von 45° ca. 5 cm lange Striche auf der Lackoberfläche aufgebracht. Es wird dabei mit einem solchen Druck gearbeitet, daß die Bleistiftspitze gerade noch nicht bricht. Auswertung: Notiert wird der Bleistifttyp, bei dem keine Markierung mehr auf der Lackoberfläche zu erkennen ist.

[6] **Volvo Crack Test:**

Prüfbedingungen 1 Cyclus:

4h bei 50 °C im Ofen
2h bei 35 °C und 95-100 % rel. Luftfeuchte
2h bei 35 °C und 95-100 % rel. Luftfeuchte und 21

Schwefeldioxid

16h bei -30 °C im Tiefkühlschrank
Tafel mit Wasser waschen und trocknen
Auswertung:
Blasengrad nach DIN 53209
Risse ASTM D660

Zusammenfassung der Prüfergebnisse

Die Beschichtungen der Vergleichsbeispiele 1 bis 4 weisen zwar eine gute Kratzfesitgkeit auf, jedoch sind die Haftung (Gitterschnittprüfung) und die Härte völlig unzureichend.

Die Beschichtungen der Vergleichsbeispiele 5 bis 8 weisen zwar eine gute Haftung zur Basislackschicht (Gitterschnittprüfung) sowie eine gute Härte auf, jedoch ist die Kratzfestigkeit der resultierenden Beschichtungen völlig unzureichend. Die Kratzfestigkeit wird auch durch Variation der Härter nicht verbessert.

Der Vergleich der Beispiele 1 bis 12 mit den Vergleichsbeispielen 1 bis 8 zeigt, daß durch Verwendung einer Mischung aus Hydroxipropylmethacrylat und Hydroxibutylacrylat als Monomerkomponente die Haftung zur Basislackschicht sowie die Härte der resultierenden Beschichtung im Vergleich zur alleinigen Verwendung von Hydroxibutylacrylat als Monomerkomponente deutlich verbessert werden. Gleichzeitig ist aber trotz Mitverwendung von Hydroxipropylmethacrylat auch die Kratzfestigkeit der resultierenden Beschichtungen zumindest ausreichend (Beispiele 4, 8 und 12) und sie kann durch entsprechende Auswahl der Zusammensetzung der Härterlösung weiter verbessert werden (gute bis sehr gute xratzfestigkeit in den Beispielen 1 bis 3, 5 bis 7 und 9 bis 11). Ferner zeigen die Beispiele 1 bis 12, daß mit steigendem Anteil an Hydroxipropylmethacrylat die Kratzfestigkeit zwar abnimmt (gleichzeitig aber die Härte und Haftung aber zunehmen), diese Abnahme der Kratzfestigkeit aber durch einen steigenden Anteil der Härterkomponente (B2) zumindest teilweise ausgeglichen werden kann.

**Patentansprüche**

1.  Beschichtungsmittel, enthaltend

    (A) mindestens ein hydroxylgruppenhaltiges Polyacrylatharz und
    (B) mindestens ein Vernetzungsmittel,
    dadurch gekennzeichnet, daß

    1.) die Komponente (A) ein hydroxylgruppenhaltiges Polyacrylatharz ist, das erhältlich ist, indem

    (a) 10 bis 51 Gew.-% einer Mischung aus

    (a1) einem oder mehreren Monomeren, ausgewählt aus der Gruppe 4-Hydroxi-n-butylacrylat und/oder 4-Hydroxi-n-butylmethacrylat und/oder 3-Hydroxi-n-butylacrylat und/oder 3-Hydroxi-n-butylmethacrylat und

    (a2) einem oder mehreren Monomeren, ausgewählt aus der Gruppe 3-Hydroxi-n-propylacrylat und/oder 3-Hydroxi-n-propylmethacrylat und/oder 2-Hydroxi-n-propylacrylat und/oder 2-Hydroxi-n-propylmethacrylat,

(b) 0 bis 20 Gew.-% eines von (a) verschiedenen hydroxylgruppenhaltigen Esters der Acrylsäure oder der Methacrylsäure mit mindestens 5 C-Atomen im Alkoholrest und/oder eines von (a) verschiedenen hydroxylgruppenhaltigen Esters einer polymerisierbaren ethylenisch ungesättigten Carbonsäure oder eines Gemisches aus solchen Monomeren,

(c) 28 bis 85 Gew.-% eines von (a) und (b) verschiedenen aliphatischen oder cycloaliphatischen Esters der Acrylsäure oder der Methacrylsäure mit mindestens 4 C-Atomen im Alkoholrest oder eines Gemisches aus solchen Monomeren,

(d) 0 bis 25 Gew.-% eines von (a), (b) und (c) verschiedenen vinylaromatischen Kohlenwasserstoffs oder eines Gemisches aus solchen Monomeren,

(e) 0 bis 5 Gew.-% einer ethylenisch ungesättigten Carbonsäure oder einer Mischung aus ethylenisch ungesättigten Carbonsäuren und

(f) 0 bis 20 Gew.-% eines von (a), (b), (c), (d) und (e) verschiedenen ethylenisch ungesättigten Monomeren oder eines Gemisches aus solchen Monomeren

zu einem Polyacrylatharz mit einer Hydroxylzahl von 60 bis 200 mgKOH/g, einer Säurezahl von 0 bis 35 mgKOH/g und einem zahlenmittleren Molekulargewicht von 1000 bis 5000 polymerisiert werden, wobei die Summe der Gewichtsanteile der Komponenten (a) bis (f) jeweils 100 Gew.-% beträgt,

2.) die Komponente (B) eine Mischung aus

(B1) mindestens einem Polymerisat eines aliphatischen und/oder cycloaliphatischen und/oder eines araliphatischen Di- und/oder Polyisocyanates mit einer mittleren Funktionalität von 3 bis 4 und mit einem Uretdiongruppengehalt von maximal 5 %,

(B2) ggf. mindestens einem Polymerisat eines aliphatischen und/oder cycloaliphatischen und/oder eines araliphatischen Di- und/oder Polyisocyanates mit einer mittleren Funktionalität von 2 bis 3 und mit einem Uretdiongruppengehalt von 20 bis 40 % und

(B3) ggf. mindestens einem von (B1) und (B2) verschiedenen aliphatischen und/oder cycloaliphatischen und/oder araliphatischen Di- oder Polyisocyanat

ist und

3.) es als Vernetzungsmittel (B) eine Mischung aus

(B1) 45 bis 89 Gew.-% der Komponente (B1),
(B2) 11 bis 55 Gew.-% der Komponente (B2) und
(B3) 0 bis 10 Gew.-% der Komponente (B3)

enthält, wenn das Acrylatharz (A) hergestellt worden ist unter Verwendung von mehr als 14 Gew.-%, bezogen auf das Gesamtgewicht der eingesetzten Monomeren (a) bis (f), hydroxylgruppenhaltiger, von (a1) verschiedener, Monomerer, oder daß es als Vernetzungsmittel (B) eine Mischung aus

(B1) 45 bis 100 Gew.-% der Komponente (B1),
(B2) 0 bis 55 Gew.-% der Komponente (B2) und
(B3) 0 bis 10 Gew.-% der Komponente (B3)

enthält, wenn das Acrylatharz (A) hergestellt worden ist unter Verwendung von maximal 14 Gew.-%, bezogen auf das Gesamtgewicht der eingesetzten Monomeren (a) bis (f), hydroxylgruppenhaltiger, von (a1) verschiedener, Monomerer.

2. Beschichtungsmittel nach Anspruch 1, dadurch gekennzeichnet, daß das hydroxylgruppenhaltige Polyacrylatharz erhältlich ist aus

(a) 10 bis 35 Gew.-% der Komponente (a),

(b) 0 bis 10 Gew.-% der Komponente (b),

(c) 40 bis 70 Gew.-% der Komponente (c),

(d) 5 bis 20 Gew.-% der Komponente (d),

(e) 1 bis 3 Gew.-% der Komponente (e) und

(f) 0 bis 15 Gew.-% der Komponente (f).

3. Beschichtungsmittel nach Anspruch 1 oder 2, dadurch gekennzeichnet, daß die Zusammensetzung der Komponente (a) so ausgewählt wird, daß bei alleiniger Polymerisation der Komponente (a) ein Polyacrylatharz mit einer Glasübergangstemperatur von -62 bis +65°C, bevorzugt von -50 bis +35°C, erhalten wird.

4. Beschichtungsmittel nach einem der Ansprüche 1 bis 3, dadurch gekennzeichnet, daß als Komponente (a) eine Mischung aus

(a1) 10 bis 85 Gew.-%, bevorzugt 20 bis 65 Gew.-%, der Komponente (a1) und

(a2) 15 bis 90 Gew.-%, bevorzugt 35 bis 80 Gew.-%, der Komponente (a2)

eingesetzt wird, wobei die Summe der Gewichtsanteile der Komponenten (a1) und (a2) jeweils 100 Gew.-% beträgt.

5. Beschichtungsmittel nach einem der Ansprüche 1 bis 4, dadurch gekennzeichnet, daß als Komponente (a) eine Mischung aus

(a1) 4-Hydroxi-n-butylacrylat und/oder 3-Hydroxi-n-butylacrylat und

(a2) 3-Hydroxi-n-propylmethacrylat und/oder 2-Hydroxi-n-propylmethacrylat

eingesetzt wird.

6. Beschichtungsmittel nach einem der Ansprüche 1 bis 5, dadurch gekennzeichnet, daß die Zusammensetzung der Komponente (c) so ausgewählt ist, daß bei alleiniger Polymerisation der Komponente (c) ein Polyacrylatharz mit einer Glasübergangstemperatur von -30 bis 100°C, bevorzugt von -10 bis + 90°C, erhalten wird.

7. Beschichtungsmittel nach einem der Ansprüche 1 bis 6, dadurch gekennzeichnet, daß die Komponente (c) ausgewählt ist aus n-Butyl(meth)acrylat, i-Butyl(meth)acrylat, tert.-Butyl(meth)acrylat, Furfuryl(meth)acrylat, n-Hexyl(meth)acrylat, Lauryl(meth)acrylat, Stearyl(meth)acrylat, Cyclohexyl(meth)acrylat und tert.-Butylcyclohexyl(meth)acrylat.

8. Beschichtungsmittel nach einem der Ansprüche 1 bis 7, dadurch gekennzeichnet, daß das Polyacrylatharz ein zahlenmittleres Molekulargewicht von 1800 bis 3500, eine Hydroxylzahl von 80 bis 160 mgKOH/g und eine Säurezahl von 0 bis 25 mgKOH/g aufweist.

9. Beschichtungsmittel nach einem der Ansprüche 1 bis 8, dadurch gekennzeichnet, daß es als Komponente (B1) und/oder (B2) Polymerisate auf Basis von 3,5,5-Trimethyl-1-isocyanato-3-isocyanatomethylcyclohexan sowie insbesondere Polymerisate auf Basis von Hexamethylendiisocyanat enthält.

10. Verfahren zur Herstellung eines mehrschichtigen schützenden und/oder dekorativen Überzuges auf einer Substratoberfläche, bei dem

(1) ein pigmentierter Basislack auf die Substratoberfläche aufgebracht wird,

(2) aus dem in Stufe (1) aufgebrachten Basislack ein Polymerfilm gebildet wird,

(3) auf die so erhaltene Basisschicht ein transparenter Decklack, der

(A) ein hydroxylgruppenhaltiges Polyacrylatharz und
(B) ein Vernetzungsmittel

enthält, aufgebracht wird und anschließend

(4) Basislackschicht und Decklackschicht zusammen gehärtet werden,
dadurch gekennzeichnet, daß als Decklack ein Beschichtungsmittel nach einem der Ansprüche 1 bis 9 eingesetzt wird.

11. Verwendung der Beschichtungsmittel nach einem der Ansprüche 1 bis 9 im Bereich der Autoreparaturlackierung, insbesondere als Decklack.

**Claims**

1.  Coating composition comprising

    (A) at least one hydroxyl group-containing polyacrylate resin, and
    (B) at least one crosslinking agent,
    characterized in that

    1.) component (A) is a hydroxyl group-containing polyacrylate resin which is obtainable by polymerizing

    (a) from 10 to 51% by weight of a mixture comprising

    (a1) one or more monomers selected from the group consisting of 4-hydroxy-n-butyl acrylate and/or 4-hydroxy-n-butyl methacrylate and/or 3-hydroxy-n-butyl acrylate and/or 3-hydroxy-n-butyl methacrylate, and

    (a2) one or more monomers selected from the group consisting of 3-hydroxy-n-propyl acrylate and/or 3-hydroxy-n-propyl methacrylate and/or 2-hydroxy-n-propyl acrylate and/or 2-hydroxy-n-propyl methacrylate,

    (b) from 0 to 20% by weight of a hydroxyl group-containing ester of acrylic acid or of methacrylic acid which is different from (a) and has at least 5 carbon atoms in the alcohol residue and/or of a hydroxyl group-containing ester of a polymerizable ethylenically unsaturated carboxylic acid, which is different from (a), or of a mixture of such monomers,

    (c) from 28 to 85% by weight of an aliphatic or cycloaliphatic ester of acrylic acid or of methacrylic acid which is different from (a) and (b) and has at least 4 carbon atoms in the alcohol residue, or of a mixture of such monomers,

    (d) from 0 to 25% by weight of an aromatic vinyl hydrocarbon which is different from (a), (b) and (c), or of a mixture of such monomers,

    (e) from 0 to 5% by weight of an ethylenically unsaturated carboxylic acid, or of a mixture of ethylenically unsaturated carboxylic acids, and

    (f) from 0 to 20% by weight of an ethylenically unsaturated monomer which is different from (a), (b), (c), (d) and (e), or of a mixture of such monomers

    to give a polyacrylate resin having a hydroxyl number of from 60 to 200 mg of KOH/g, an acid number of from 0 to 35 mg of KOH/g and a number-average molecular weight of from 1000 to 5000, the sum of the proportions by weight of components (a) to (f) being in each case 100% by weight, and

    2.) component (B) is a mixture comprising

    (B1) at least one polymer of an aliphatic and/or cycloaliphatic and/or of an araliphatic di- and/or polyisocyanate having an average functionality of from 3 to 4 and having a uretdione group content of not more than 5%,
    (B2) optionally at least one polymer of an aliphatic and/or cycloaliphatic and/or of an araliphatic di- and/or polyisocyanate having an average functionality of from 2 to 3 and having a uretdione group content of from 20 to 40%, and

(B3) optionally at least one aliphatic and/or cycloaliphatic and/or araliphatic di- or polyisocyanate and

3.) it comprises as crosslinking agent (B) a mixture of

(B1) from 45 to 89% by weight of component (B1),
(B2) from 11 to 55% by weight of component (B2), and
(B3) from 0 to 10% by weight of component (B3),

if the acrylate resin (A) has been prepared using more than 14% by weight, based on the overall weight of the monomers (a) to (f) employed, of hydroxyl-containing monomers other than (a1), or in that it comprises as crosslinking agent (B) a mixture of

(B1) from 45 to 100% by weight of component (B1),
(B2) from 0 to 55% by weight of component (B2), and
(B3) from 0 to 10% by weight of component (B3),

if the acrylate resin (A) has been prepared using not more than 14% by weight, based on the overall weight of the monomers (a) to (f) employed, of hydroxyl-containing monomers other than (a1).

2. Coating composition according to Claim 1, characterized in that the hydroxyl group-containing polyacrylate resin is obtainable from

(a) from 10 to 35% by weight of component (a),
(b) from 0 to 10% by weight of component (b),
(c) from 40 to 70% by weight of component (c),
(d) from 5 to 20% by weight of component (d),
(e) from 1 to 3% by weight of component (e), and
(f) from 0 to 15% by weight of component (f).

3. Coating composition according to Claim 1 or 2, characterized in that the composition of component (a) is selected such that the polymerization of component (a) alone produces a polyacrylate resin having a glass transition temperature of from -62 to +65°C, preferably from -50 to +35°C.

4. Coating composition according to one of Claims 1 to 3, characterized in that the mixture employed as component (a) comprises

(a1) from 10 to 85% by weight, preferably from 20 to 65% by weight, of component (a1), and

(a2) from 15 to 90% by weight, preferably from 35 to 80% by weight, of component (a2),

the sum of the proportions by weight of components (a1) and (a2) being in each case 100% by weight.

5. Coating composition according to one of Claims 1 to 4, characterized in that the mixture employed as component (a) comprises

(a1) 4-hydroxy-n-butyl acrylate and/or 3-hydroxy-n-butyl acrylate, and

(a2) 3-hydroxy-n-propyl methacrylate and/or 2-hydroxy-n-propyl methacrylate.

6. Coating composition according to one of Claims 1 to 5, characterized in that the composition of component (c) is selected such that the polymerization of component (c) alone produces a polyacrylate resin having a glass transition temperature of from -30 to 100°C, preferably from -10 to +90°C.

7. Coating composition according to one of Claims 1 to 6, characterized in that component (c) is selected from n-butyl (meth)acrylate, isobutyl (meth)acrylate, tert-butyl (meth)acrylate, furfuryl (meth)acrylate, n-hexyl (meth)acrylate, lauryl (meth)acrylate, stearyl (meth)acrylate, cyclohexyl (meth)acrylate and tert-butylcyclohexyl (meth)acrylate.

EP 0 748 262 B1

8. Coating composition according to one of Claims 1 to 7, characterized in that the polyacrylate resin has a number-average molecular weight from 1800 to 3500, a hydroxyl number of from 80 to 160 mg of KOH/g and an acid number of from 0 to 25 mg of KOH/g.

9. Coating composition according to one of Claims 1 to 8, characterized in that it contains as component (B1) and/or (B2) polymers based on 3,5,5-tri-methyl-1-isocyanato-3-isocyanatomethylcyclohexane and, in particular, polymers based on hexamethylene diisocyanate.

10. Process for producing a multicoat protective and/or decorative finish on a substrate surface, in which

   (1) a pigmented basecoat is applied to the substrate surface,
   (2) a polymer film is formed from the basecoat applied in step (1),
   (3) a transparent topcoat containing

      (A) a hydroxyl group-containing polyacrylate resin and
      (B) a crosslinking agent

   is applied to the resulting basecoat, and subsequently
   (4) basecoat and topcoat are cured together,
   characterized in that the topcoat employed is a coating composition according to one of Claims 1 to 9.

11. Use of the coating compositions according to one of Claims 1 to 9 in the sector of automotive refinishing, especially as a topcoat.

**Revendications**

1. Agent de revêtement, contenant

   (A) au moins une résine de polyacrylate contenant des groupements hydroxyles et
   (B) au moins un agent de réticulation,
   caractérisé en ce que

      1.) le composant (A) est une résine de polyacrylate contenant des groupements hydroxyles, que l'on peut obtenir en procèdant à la polymérisation

      (a) de 10 à 51 % en poids d'un mélange

         (a1) d'un ou de plusieurs monomères, choisis parmi le groupe acrylate de 4-hydroxy-n-butyle, et/ou méthacrylate de 4-hydroxy-n-butyle, et/ou acrylate de 3-hydroxy-n-butyle et/ou méthacrylate de 3-hydroxy-n-butyle et
         (a2) d'un ou de plusieurs monomères choisis parmi le groupe acrylate de 3-hydroxy-n-propyle, et/ou méthacrylate de 3-hydroxy-n-propyle, et/ou acrylate de 2-hydroxy-n-propyle et/ou méthacrylate de 2-hydroxy-n-propyle

      (b) de 0 à 20 % en poids d'un ester contenant des groupements hydroxyles, différent de (a), de l'acide acrylique ou de l'acide méthacrylique, ayant au moins 5 atomes de C dans le résidu alcool et/ou d'un ester contenant des groupements hydroxyles, différent de (a), d'un acide carboxylique polymérisable éthyléniquement insaturé, ou d'un mélange de monomères de ce genre,
      (c) de 28 à 85 % en poids d'un ester aliphatique ou cycloaliphatique, différent de (a) et de (b), de l'acide acrylique ou de l'acide méthacrylique, ayant au moins 4 atomes de C dans le résidu alcool, ou d'un mélange de monomères de ce genre,
      (d) de 0 à 25 % en poids d'un hydrocarbure vinylaromatique, différent de (a), (b) et (c), ou d'un mélange de monomères de ce genre,
      (e) de 0 à 5 % en poids d'un acide carboxylique éthyléniquement insaturé ou d'un mélange d'acides carboxyliques éthyléniquement insaturés et
      (f) de 0 à 20 % en poids d'un monomère éthyléniquement insaturé, différent de (a), (b), (c), (d) et (e), ou d'un mélange de monomères de ce genre pour former une résine de polyacrylate ayant un indice hydroxyle de 60 à 200 mg de KOH/g, un indice d'acidité de 0 à 35 mg de KOH/g et un poids moléculaire moyen au nombre de 1000 à 5000, la somme des proportions en poids des composants (a) à (f) étant à chaque fois de 100 % en poids,

2.) le composant (B) est un mélange

(B1) d'au moins un polymère d'un diisocyanate et/ou d'un polyisocyanate aliphatique et/ou cycloaliphatique et/ou araliphatique ayant une fonctionnalité moyenne de 3 à 4 et une teneur en groupements uretdione d'au maximum 5 %,
(B2) le cas échéant d'au moins un polymère d'un diisocyanate et/ou d'un polyisocyanate aliphatique et/ou cycloaliphatique et/ou araliphatique ayant une fonctionnalité moyenne de 2 à 3 et une teneur en groupements uretdione allant de 20 à 40 %, et
(B3) le cas échéant d'au moins un diisocyanate et/ou un polyisocyanate aliphatique et/ou cycloaliphatique et/ou araliphatique, différent de (B1) et de (B2), et

3.) il contient, en tant qu'agent de réticulation (B), un mélange

(B1) de 45 à 89 % en poids du composant (B1),
(B2) de 11 à 55 % en poids du composant (B2) et
(B3) de 0 à 10 % en poids du composant (B3),

si la résine d'acrylate (A) a été préparée par utilisation de plus de 14 % en poids, par rapport au poids total des monomères utilisés (a) à (f), de monomères différents de (a1), contenant des groupements hydroxyles, ou en ce qu'il contient, en tant qu'agent de réticulation (B), un mélange

(B1) de 45 à 100 % en poids du composant (B1),
(B2) de 0 à 55 % en poids du composant (B2) et
(B3) de 0 à 10 % en poids du composant (B3),

si la résine d'acrylate (A) a été préparée par utilisation d'au maximum 14 % en poids, par rapport au poids total des monomères utilisés (a) à (f), de monomères différents de (a), contenant des groupements hydroxyles.

2. Agent de revêtement selon la revendication 1, caractérisé en ce que l'on peut obtenir la résine de polyacrylate contenant des groupements hydroxyles à partir de

(a) 10 à 35 % en poids du composant (a),
(b) 0 à 10 % en poids du composant (b),
(c) 40 à 70 % en poids du composant (c),
(d) 5 à 20 % en poids du composant (d),
(e) 1 à 3 % en poids du composant (e),
(f) 0 à 15 % en poids du composant (f).

3. Agent de revêtement selon la revendication 1 ou 2, caractérisé en ce que la composition du composant (a) est choisie de telle manière qu'en cas de polymérisation unique du composant (a), l'on obtienne une résine de polyacrylate ayant une température de transition vitreuse de -62 à +65°C, de préférence de -50 à +35°C.

4. Agent de revêtement selon l'une quelconque des revendications 1 à 3, caractérisé en ce que l'on utilise, en tant que composant (a), un mélange

(a1) de 10 à 85 % en poids, de préférence de 20 à 65 % en poids du composant (a1) et
(a2) de 15 à 90 % en poids, de préférence de 35 à 80 % en poids du composant (a2), la somme des proportions en poids des composants (a1) et (a2) étant à chaque fois de 100 % en poids.

5. Agent de revêtement selon l'une quelconque des revendications 1 à 4, caractérisé en ce que l'on utilise, en tant que composant (a), un mélange

(a1) d'acrylate de 4-hydroxy-n-butyle et/ou d'acrylate de 3-hydroxy-n-butyle et
(a2) de méthacrylate de 3-hydroxy-n-propyle et/ou de méthacrylate de 2-hydroxy-n-propyle.

**6.** Agent de revêtement selon l'une quelconque des revendications 1 à 5, caractérisé en ce que la composition du composant (c) est choisie de telle manière qu'en cas de polymérisation unique du composant (c), l'on obtienne une résine de polyacrylate ayant une température de transition vitreuse de -30 à 100°C, de préférence de -10 à +90°C.

**7.** Agent de revêtement selon l'une quelconque des revendications 1 à 6, caractérisé en ce que le composant (c) est choisi parmi le groupe (méth)acrylate de n-butyle, (méth)acrylate d'i-butyle, (méth)acrylate de tert-butyle, (méth)acrylate de furfuryle, (méth)acrylate de n-hexyle, (méth)acrylate de lauryle, (méth)acrylate de stéaryle, (méth)acrylate de cyclohexyle et (méth)acrylate de tert-butylcyclohexyle.

**8.** Agent de revêtement selon l'une quelconque des revendications 1 à 7, caractérisé en ce que la résine de polyacrylate présente un poids moléculaire moyen au nombre de 1 800 à 3 500, un indice hydroxyle de 80 à 160 mg de KOH/g et un indice d'acidité de 0 à 25 mg de KOH/g.

**9.** Agent de revêtement selon l'une quelconque des revendications 1 à 8, caractérisé en ce qu'il contient, en tant que composant (B1) et/ou (B2), des polymères à base de 3,5,5-triméthyl-1-isocyanato-3-isocyanatométhylcyclohexane ainsi qu'en particulier des polymères à base de diisocyanate d'hexaméthylène.

**10.** Procédé de préparation d'un revêtement protecteur et/ou décoratif multicouche sur une surface d'un substrat, lors duquel

(1) l'on procède à l'application sur la surface du substrat d'une laque de base pigmentée,
(2) l'on forme, à partir de la laque de base appliquée dans l'étape (1), un film polymère,
(3) l'on procède à l'application, sur la couche de base ainsi obtenue, d'une laque de finition transparente qui contient

(A) une résine de polyacrylate contenant des groupements hydroxyles et
(B) un agent de réticulation, et

(4) l'on procède ensuite au durcissement conjoint de la couche de laque de base et de la couche de laque de finition,
caractérisé en ce que l'on utilise, en tant que laque de finition, un agent de revêtement conformément à l'une des revendications 1 à 9.

**11.** Utilisation des agents de revêtement selon l'une quelconque des revendications 1 à 9 dans le domaine du laquage de réparation automobile, en particulier en tant que laque de finition.